(19) Europäisches Patentamt
European Patent Office
Office européen des brevets

(11) **EP 2 901 171 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **13756901.8**

(22) Anmeldetag: **04.09.2013**

(51) Int Cl.:
**G01S 3/86** *(2006.01)*    **G01S 5/22** *(2006.01)*

(86) Internationale Anmeldenummer:
**PCT/EP2013/068251**

(87) Internationale Veröffentlichungsnummer:
**WO 2014/048689 (03.04.2014 Gazette 2014/14)**

(54) **VERFAHREN ZUR UNTERDRÜCKUNG VON PERIODISCHEN ANTEILEN IN EMPFANGSSIGNALEN, DIE TRANSIENTE SIGNALE ENTHALTEN KÖNNEN, INSBESONDERE ZUR ORTUNG VON GESCHOSS- UND MÜNDUNGSKNALLEN**

METHOD FOR SUPPRESSING PERIODIC CONTENTS OF RECEIVE SIGNALS THAT COULD CONTAIN TRANSIENT SIGNALS, PARTICULARLY FOR LOCALISING SHOT AND MUZZLE BLASTS

PROCÉDÉ DE SUPPRESSION DE COMPOSANTES PÉRIODIQUES DE SIGNAUX DE RÉCEPTION SUSCEPTIBLES DE CONTENIR DES SIGNAUX UTILES TRANSITOIRES, EN PARTICULIER POUR LOCALISER DES DÉTONATIONS DE TIR ET DE BOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2012 DE 102012217522**

(43) Veröffentlichungstag der Anmeldung:
**05.08.2015 Patentblatt 2015/32**

(73) Patentinhaber: **Rheinmetall Defence Electronics GmbH**
**28309 Bremen (DE)**

(72) Erfinder:
• **WALZER, Martin**
**28309 Bremen (DE)**
• **HERMSTRÜWER, Günther**
**28832 Achim (DE)**

(74) Vertreter: **Greif, Thomas**
**Thul Patentanwaltsgesellschaft mbH**
**Rheinmetall Platz 1**
**40476 Düsseldorf (DE)**

(56) Entgegenhaltungen:
**DE-A1- 3 511 248    GB-A- 2 298 278**

• **DELPHINE FEUERSTEIN ET AL: "Practical Methods for Noise Removal: Applications to Spikes, Nonstationary Quasi-Periodic Noise, and Baseline Drift", ANALYTICAL CHEMISTRY, Bd. 81, Nr. 12, 15. Juni 2009 (2009-06-15) , Seiten 4987-4994, XP055087777, ISSN: 0003-2700, DOI: 10.1021/ac900161x**
• **PETER STROBACH ET AL: "Event-S ynchronous Cancellation of the Heart Interference in Biomedical Signals", EEE TRANSACTIONS ON BIOMEDICAL ENGINEERING, Bd. 41, Nr. 4, April 1994 (1994-04), Seiten 343-350, XP055087945, DOI: 10.1109/10.284962**

**Beschreibung**

Bekannterweise ist für eine sichere akustische Aufklärung zur Ortung von Gewehrschützen oder anderen Feuerstellungen die korrekte Messung des Geschoss- und Mündungsknalls notwendig. Bei einem Schuss mit Überschallmunition entstehen der Geschossknall durch das mit Überschall fliegende Geschoss und der Mündungsknall durch die an der Gewehrmündung austretenden Gase. Bei einem direkten Beschuss ist der Mündungsknall wegen der größeren Entfernung zur Geräuschquelle meist deutlich leiser als der Geschossknall. Mittels Mikrofonantennen lassen sich der Geschoss- und der Mündungsknall detektieren, um die Feuerstellung hinsichtlich der Richtung und der Entfernung aufzuklären.

Der Empfang akustischer Signale ist meist unvermeidbar mit zusätzlichem unerwünschtem Lärm verbunden. So stören im freien Feld breitbandige Windgeräusche, und in urbaner Umgebung existieren vielfältige Lärmquellen, die sowohl breitbandige, schmalbandige oder periodische Geräusche erzeugen. Besonders schwierig ist die akustische Aufklärung, wenn die Geräuschmessung auf einem sich bewegenden Fahrzeug erfolgt. So hat sich gezeigt, dass mit einer akustischen Antenne auf einem Lastwagen infolge des Motorenlärms zwar meistens der Geschossknall detektiert werden kann, aber nicht mehr der Mündungsknall. Bei Hubschraubern kann der Rotorenlärm sogar Geschossknalle überdecken.

Voraussetzung für die Lokalisierung einer Feuerstellung (z.B. eines Schützen) mittels der empfangenen Schusssignaturen ist, dass die notwendigen Merkmale, beispielsweise die Einfallsrichtungen der Knalle, Empfangszeitpunkte etc., zuverlässig extrahiert werden können, und die Einflussgrößen genau bestimmbar sind. Die sichere Detektion der Nutzsignale erfordert Verarbeitungsverfahren, die das Nutzsignal-Störsignal-Verhältnis verbessern. Die zuverlässige Extraktion der Nutzsignalmerkmale erfordert Verarbeitungsverfahren, die das Nutzsignal nicht verzerren.

Als klassische Verfahren zur Geräuschunterdrückung (ANC Adaptive Noise Cancelling) sind adaptive Filter bekannt. Die zusätzliche Messung eines Referenzsignals, das möglichst dem Störsignal entsprechen soll, erlaubt eine adaptive Schätzung und damit die Unterdrückung der Störanteile im Empfangssignal. Bewährte ANC-Methoden sind das LMS (Least Mean Square) - und das RLS (Recursive Least Square)-Verfahren.

Diese werden bekannterweise in Freisprecheinrichtungen für die Verwendung von Mobiltelefonen in Autos eingesetzt. Das Hauptmikrofon registriert das Sprachsignal des Fahrers zusammen mit den unerwünschten Geräuschen. Ein Referenzmikrofon misst die Motorengeräusche. Durch Anwendung eines ANC-Verfahrens kann dann die Sprachverständlichkeit des Hauptmikrofonsignals verbessert werden.

ANC-Filter arbeiten umso erfolgreicher, je besser die beiden folgenden Randbedingungen erfüllt sind:

- Die additive Störung im Empfangssignal und die zusätzliche Referenzmessung sind korreliert. Bei geringer Korrelation ist auch nur eine geringe Störunterdrückung zu erreichen.
- Das Nutzsignal und das Referenzsignal sind unkorreliert. Treten im Referenzsignal Anteile des Nutzsignals auf, so entstehen Verzerrungen im Ausgangssignal.

Bei der akustischen Aufklärung von Gewehrschützen mit einer Mikrofonantenne auf einem fahrenden Fahrzeug haben sich adaptive Filter als ungeeignet gezeigt, da die beiden vorstehend aufgeführten ANC-Voraussetzungen nur unzureichend erfüllt sind: So repräsentiert eine zusätzliche Referenzmessung an einem Ort nur schlecht das komplexe Fahrzeuggeräusch, das außen am Fahrzeug herrscht. Das gemessene Referenzsignal enthält auch immer deutliche Anteile der Knalle, so dass Verzerrungen am Ausgang des adaptiven Filters vorhanden sind. Die Verzerrungen des Geschossknalls sind so ausgeprägt, dass die für die Lokalisierung erforderlichen Merkmale wegen der großen Fehler unbrauchbar werden. Es hat sich gezeigt, dass massive Verzerrungen des lauten Geschossknalls bewirken, dass sogar der nachfolgende leisere Mündungsknall nicht mehr detektierbar sein kann. Die klassischen ANC-Verfahren sind daher für die akustische Aufklärung von Gewehrschützen ungeeignet.

Außerdem sind ANC-Verfahren grundsätzlich nicht anwendbar, wenn der Einsatz eines Referenzsensors unmöglich ist. Beispiele sind eine auf der Schulter getragene Mikrofonantenne beim Einsatz in einer störenden urbanen Umgebung sowie eine an einem Hubschrauber befestigte Mikrofonantenne gestört durch den Lärm an den Enden der Rotorblätter.

Der Erfindung liegt daher die Aufgabe zugrunde, ein Verfahren zur Unterdrückung von periodischen Anteilen in Empfangssignalen, die transiente Nutzsignale enthalten können, insbesondere zur Ortung von Geschoss- und Mündungsknallen bereitzustellen, bei dem das Verhältnis Nutzsignal zu Störsignal deutlich verbessert wird und Verzerrungen im Nutzsignal verhindert werden, ohne dass eine Referenzmessung durchgeführt werden muss.

Diese Aufgabe wird durch ein zweistufiges Iterationsverfahren gemäß Anspruch 1 gelöst, bei dem quasiperiodische Störanteile im Empfangssignal ermittelt und anschließend eliminiert werden. Der Oberbegriff ist aus DELPHINE FEUERSTEIN ET AL: "Practical Methods for Noise Removal: Applications to Spikes, Nonstationary Quasi-Periodic Noise, and Baseline Drift", ANALYTICAL CHEMISTRY, Bd. 81, Nr. 12, 15. Juni 2009 (2009-06-15), Seiten 4987-4994, XP055087777, bekannt.

Für die transienten Nutzsignale, die innerhalb des Empfangssignals in demselben Zeitintervall und in demselben Frequenzbereich wie die Störprozesse liegen, wird das Nutzsignal-Störsignal-Verhältnis deutlich verbessert, wobei Verzerrungen minimal bleiben. Die Unterdrückung von periodischen Störprozessen erfolgt autoadaptiv aufgrund deren Signalanteile im Empfangssignal, ohne dass eine zusätzliche Referenzmessung des Störsignals erfolgt.

Dabei kann das Nutzsignal eine Mehrzahl von aufeinanderfolgenden, kurzzeitigen Stoßvorgängen enthalten. Es wird nicht vorausgesetzt, dass nur eine einzelne Transiente isoliert existiert.

Der quasiperiodische Störprozess kann aus einer Mehrzahl von periodischen (nahezu stationären) Zufallsprozessen mit unterschiedlichen Grundfrequenzen, harmonischen Schwingungen und Amplituden bestehen. Der farbige Rauschprozess kann aus mehreren breitbandigen, farbigen rauschartigen Zufallsprozessen aus unterschiedlich räumlich verteilten Quellen bestehen.

Nachfolgend wird die Erfindung anhand eines bevorzugten Ausführungsbeispiels näher erläutert.

Die Figuren dienen zur Erläuterung der Erfindung. Es zeigen

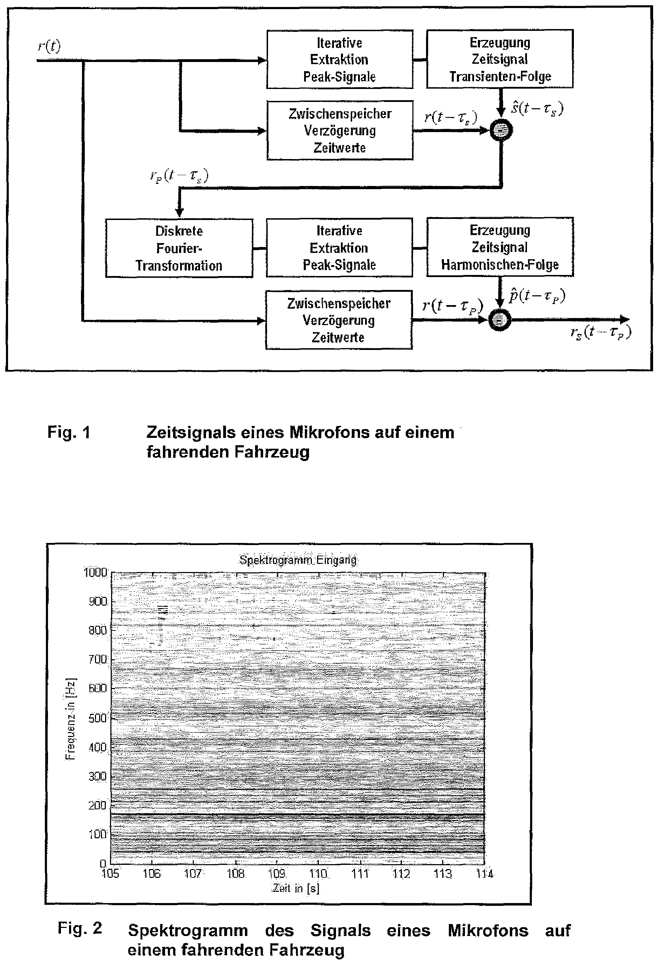

Figur 1    das Zeitsignal eines Mikrofons auf einem fahrenden Fahrzeug,
Figur 2    das Spektrogramm des Signals eines Mikrofons auf einem fahrenden Fahrzeug,
Figur 3    ein Blockschaltbild Autoadaptive Unterdrückung AAPNC (Auto-Adaptive Periodic Noise Cancelling),
Figur 4    als Blockschaltbild die iterative Extraktion von Peaks,
Figur 5    das Spektrogramm des Signals eines Mikrofons auf einem fahrenden Fahrzeug nach der autoadaptiven Unterdrückung von quasiperiodischen Störprozessen und
Figur 6    das Zeitsignal eines Mikrofons auf einem fahrenden Fahrzeug nach der autoadaptiven Unterdrückung von quasiperiodischen Störprozessen.

Das Verfahren dient zur akustischen Aufklärung von Gewehrschützen, wobei die Empfangsmikrofone auf einem Fahrzeug angeordnet sind oder von Soldaten getragen werden.

Der Nutzanteil des Empfangssignals kann aus mehreren Geschoss- und Mündungsknallen infolge mehrerer Schüsse, aus weiteren Knallen sowie aus zusätzlichen transienten Signalen infolge von Mehrwegeausbreitung oder Reflektionen bestehen. Der Anteil der periodischen Signale in einem Fahrzeuggeräusch kann durch Motor, Getriebe, Lüfter oder Resonanzen an der Konstruktion entstehen. Typische farbige Rauschprozesse bei einem Fahrzeug sind beispielsweise Wind- und Strömungsgeräusche.

Dabei lassen sich folgende Formulierungen verwenden:

- Nutzsignal

  - $s_i(t)$ einzelnes transientes stoßartiges Signal
  - $s(t)$ Folge von einzelnen transienten Signalen mit

$$s(t) = \sum s_i(t)$$

- quasiperiodischer Störprozess

  - $p_k(t)$ einzelner quasiperiodischer (nahezu) stationärer Zufallsprozess $p(t)$ Summe von einzelnen quasiperiodischen Prozessen

$$p(t) = \sum p_k(t)$$

- farbiger Rauschprozess

  - $n_l(t)$ einzelner breitbandiger farbiger rauschartiger Zufallsprozess
    $n(t)$ Summe von einzelnen Rausch-Prozessen

$$n(t) = \sum n_l(t)$$

- Empfangssignal

  - $r(t)$ additive Überlagerung aller Nutz- und aller Störsignale

3

$$r(t) = s(t) + p(t) + n(t)$$

Da die transienten Nutzsignale und die periodischen Störprozesse in demselben Zeitintervall und in demselben Frequenzbereich auftreten und zusätzlich ein Referenzsignal nicht verfügbar ist, entsteht ein Paradoxon:

- Die zuverlässige Schätzung der Nutzsignale erfordert die sichere Schätzung der periodischen Anteile.
- Die zuverlässige Schätzung der periodischen Anteile erfordert die sichere Schätzung der Nutzsignale.

Zur Veranschaulichung des Problems dienen ein paar grobe Anhaltswerte für die akustische Aufklärung von Gewehrschützen von einem Bodenfahrzeug aus.

- Schockwelle bzw. Geschossknall (Shock Wave) Frequenzbereich 500 Hz bis 50 kHz (typisch 3.0 kHz bis 7.0 kHz) Zeitdauer 0.050 ms bis 1.000 ms Pegel 140 dB bis 170 dB Spitzenpegel [dB rel. 20 $\mu$Pa]
- Mündungsknall (Muzzle Blast)) Frequenzbereich 50 Hz bis 5 kHz (typisch 0.3 kHz bis 0.7 kHz) Zeitdauer 2.000 ms bis 5.000 ms Pegel 60 dB bis 140 dB Spitzenpegel [dB rel. 20 $\mu$Pa]
- Fahrzeuggeräusche eines Lastkraftwagens Frequenzbereich 15 Hz bis 1.5 kHz Stationarität 0.5 s bis 2.0 s Pegel 80 dB bis 110 dB mittlerer Pegel [dB rel. 20 $\mu$Pa]
- Umgebungsgeräusch (einschließlich Wind- und Strömungsgeräusche) Frequenzbereich 15 Hz bis 1.5 kHz Stationarität 1 s bis 100 s Pegel 40 dB bis 90 dB mittlerer Pegel [dB rel. 20 $\mu$Pa]

Der Mündungsknall kann also leiser als das Fahrzeuggeräusch und das Umgebungsgeräusch sein. Der Geschossknall kann trotz der kurzen Dauer wegen des extremen Spitzenpegels die zuverlässige Schätzung der periodischen Anteile verhindern. Für die autoadaptive Unterdrückung erscheint daher ein zweistufiges Verfahren notwendig, bei dem für die zuverlässige Schätzung der periodischen Anteile zunächst die transienten Anteile verringert werden um anschließend für die zuverlässige Schätzung der transienten Anteile die periodischen Anteile im Empfangssignal zu minimieren.

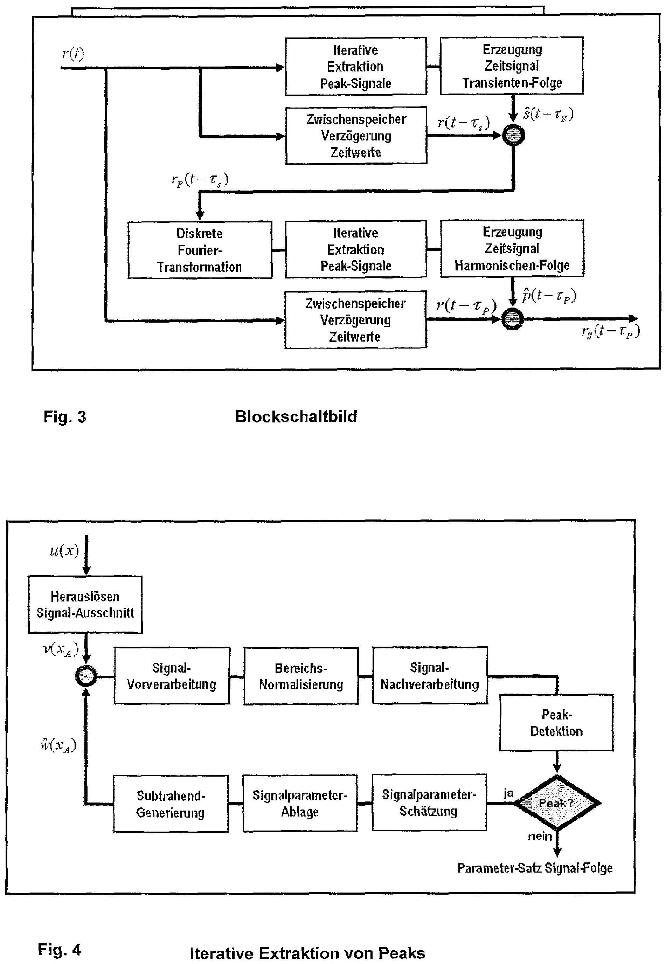

Die transienten Signalanteile besitzen die Eigenschaft, dass sie im Zeitbereich konzentrierte Impulse sind während sie im Frequenzbereich breitbandige Spektren aufweisen. Die periodischen Prozesse sind dagegen im Zeitbereich kontinuierlich während sie sich im Frequenzbereich in schmalbandigen Linien konzentrieren. Die transienten Anteile äußern sich als Peaks im Zeitbereich und die periodischen Anteile durch Peaks im Frequenzbereich. Dieser Unterschied wird für das zweistufige Verfahren zur autoadaptiven Unterdrückung der periodischen Störungen nach Figur 3 genutzt.

In dem Blockschaltbild nach Figur 3 sind alle Zeitfunktionen als Folge von Abtastwerten zu verstehen. Die Kennzeichnungen als Abtastwerte sind der Übersichtlichkeit wegen weggelassen. In dem Blockschaltbild (Figur 3) bedeuten:

$r(t-\tau_S)$ um $\tau_S$ verzögertes Empfangssignal
$\hat{s}(t-\tau_S)$ Schätzung für die transienten Nutzsignale um $\tau_S$ verzögert
$r_P(t-\tau_S)$ Empfangssignal abzüglich Schätzung für die transienten Nutzsignale
$r(t-\tau_P)$ um $\tau_P$ verzögertes Empfangssignal
$\hat{p}(t-\tau_p)$ Schätzung für die periodischen Störsignale um $\tau_p$ verzögert
$r_S(t-\tau_S)$ Empfangssignal abzüglich Schätzung für die periodischen Störsignale

In dem oberen Funktionsblock **Iterative Extraktion der Peak-Signale** werden zunächst die Transienten im Zeitbereich detektiert, deren Signal-Parameter geschätzt und daraus deren geschätzter Zeitverlauf bestimmt. Die genauere Beschreibung des Blocks **Iterative Extraktion der Peak-Signale** folgt weiter unten in Zusammenhang mit Figur 4. Die Extraktion der Peaks im Zeitbereich erfolgt für aufeinanderfolgende Zeitstücke, deren Mindestdauer sich aus der maximalen Länge der zu eliminierenden Impulse ergibt. Für Mündungsknalle wäre demnach ein Zeitintervall von 5 ms ausreichend. Um genauere Schätzwerte zu erzielen, können auch längere Signalverarbeitungsintervalle und die Verarbeitung sich überlappender Intervalle sinnvoll sein.

Der Funktionsblock **Erzeugung Zeitsignal Impuls-Folge** generiert aufgrund der Parameter der extrahierten Peaks ein Zeitsignal, das die geschätzten transienten Nutzsignale $\hat{s}(t-\tau_S)$ umfasst. In $\hat{s}(t-\tau_S)$ sollten zumindest die starken Transienten, die die spätere Schätzung der periodischen Prozesse verfälschen könnten, enthalten sein. Dazu gehören z.B. bei den Gewehrschüssen die Geschossknalle.

Das Empfangssignal wird in dem Block **Zwischenspeicher Verzögerung Zeitwerte** um das für die Peak-Extraktion benötigte Zeitintervall verzögert. Die Differenz aus beiden Zeitverläufen $r_P(t-\tau_S)$ ergibt dann das Empfangssignal abzüglich der Schätzung für die transienten Nutzsignale. Diese Differenz, die noch die periodischen Störprozesse enthält, ist das Ausgangssignal der ersten Verarbeitungsstufe und das Eingangssignal der zweiten Stufe.

Analog zur ersten Verarbeitungsstufe mit der Peak-Erkennung im Zeitbereich verläuft die Signalverarbeitung der zweiten Stufe mit der Peak-Extraktion im Frequenzbereich. Der erste Schritt ist hier daher die **Diskrete Fourier-Transformation.** In dem unteren Funktionsblock **Iterative Extraktion der Peak-Signale** werden jetzt die Harmonischen-Anteile der periodischen Prozesse im Frequenzbereich detektiert, deren Signal-Parameter geschätzt und daraus deren geschätzter Zeitverlauf bestimmt. Die genauere Beschreibung des Blocks **Iterative Extraktion der Peak-Signale** folgt weiter unten.

Die Extraktion der Peaks im Frequenzbereich erfolgt für die aufeinanderfolgenden Zeitstücke, deren Maximaldauer sich aus der noch zulässigen Annahme der zeitlichen Stationarität ergibt. Für Bodenfahrzeuge wäre demnach ein Zeitintervall von 0.5 s möglich. Um genauere Schätzwerte zu erzielen, können auch etwas längere Signalverarbeitungsintervalle und die Verarbeitung sich überlappender Intervalle sinnvoll sein.

Der Funktionsblock **Erzeugung Zeitsignal Harmonische-Folge** generiert aufgrund der Parameter der extrahierten Peaks ein Zeitsignal, das die harmonischen Schwingungen $\hat{p}(t\text{-}\tau_P)$ eines oder mehrerer periodischer Störprozesse umfasst. In $\hat{p}(t\text{-}\tau_P)$ sollten auch schwache Schwingungen, die die spätere Detektion und Parameterschätzung auch schwacher Transienten verhindern könnten, enthalten sein.

Das Empfangssignal wird in dem Block **Zwischenspeicher Verzögerung Zeitwerte** um das für die Peak-Extraktion benötigte Zeitintervall verzögert. Die Differenz aus beiden Zeitverläufen $r_S(t\text{-}\tau_S)$ ergibt dann das Empfangssignal abzüglich der Schätzung für die periodischen Störprozesse. Diese Differenz, die noch wie gewünscht die transienten Anteile enthält, ist das Ausgangssignal der zweiten und letzen Verarbeitungsstufe der autoadaptiven Unterdrückung der periodischen Störungen.

Die Wirkung der autoadaptiven Unterdrückung der periodischen Störungen hängt sowohl von den transienten und periodischen Anteilen als auch von dem gewählten Aufwand bei der iterativen Peak-Extraktion (siehe unten) ab:

- Je kürzer die Zeitdauer der Transienten ist und je länger das Zeitintervall für die Annahme periodischer Störprozesse wählbar ist, desto stärker wirkt die autoadaptive Unterdrückung.
- Je größer die zulässigen Signalverarbeitungsaufwände für die iterative Peak-Extraktion im Zeit- und im Frequenz-Bereich sein dürfen, desto besser werden die Transienten-Folge und die Harmonischen-Folge geschätzt.

Der Funktionsablaufplan für die **Iterative Extraktion der Peak-Signale** in Figur 4 gilt sowohl für die Extraktion der Knall-Impulse im Zeitbereich als auch für die Extraktion der Spektral-Linien im Frequenzbereich. Die Signalverarbeitung wird deshalb für beide Fälle parallel erläutert. Die Nomenklatur in dem Blockschaltbild (Figur 4) bedeutet:

- Bedeutung Nomenklatur für die Extraktion von Knall-Impulsen
  $u(x) = r(t)$ Zeitsignal Empfangssignal
  $v(x_A)$ Zeitausschnitt aus $r(t)$
  $\hat{w}(x_A)$ geschätzte Transienten-Folge in dem Zeitausschnitt
- Bedeutung Nomenklatur für die Extraktion von Spektral-Linien
  $u(x) = R_P(f)$ Frequenzspektrum Empfangssignal abzüglich Schätzung für die transienten Nutzsignale
  $v(x_A)$ Frequenzausschnitt aus $R_P(f)$
  $\hat{w}(x_A)$ geschätzte Linien-Folge in dem Frequenzausschnitt

Die Funktion der **Iterativen Extraktion der Peak-Signale** lässt sich so zusammenfassen:

- **Vorwärtszweig** (oberer Zweig in Figur 4):
  Signalverarbeitung mit dem Ziel einer zuverlässigen Detektion der Peaks.
- **Peak-Detektion** (rechter Zweig in Figur 4):
  Erkennung von einem oder mehreren Peaks im Signalabschnitt.
- **Rückwärtszweig** (unterer Zweig in Figur 4):
  Signalverarbeitung mit dem Ziel einer zuverlässigen Parameterschätzung und Generierung der Verläufe der Peak-Signale.
- **Subtraktion Peak-Signale** (linker Zweig in Figur 4):
  Eliminieren aller gefundenen Peak-Signale aus dem ursprünglichen Signal.

Die Iterationen werden beendet, wenn keine Peaks mehr gefunden werden oder eine maximale Anzahl von Schritten erreicht ist. Das Ergebnis ist dann der komplette Parametersatz für die Folge der Peak-Signale.

Die einzelnen Funktionsblöcke der **Iterativen Extraktion der Peak-Signale** in Figur 4 können im Wesentlichen durch standardmäßige bekannte Verfahren der Signalverarbeitung realisiert werden:

**• Herauslösen Signal-Ausschnitt**

Für aufeinander folgende Zeitintervalle, die sich zeitlich überlappen können, wird ein Zeitstück aus dem Zeitsignal für die Peak-Extraktion herausgelöst. Durch die zeitliche Überlappung ergibt sich die kontinuierliche blockweise Signalverarbeitung.

Für dieses Zeitstück wird ein Signalausschnitt (ganzer oder ausgeschnittener Zeitbereich) für die Extraktion von transienten Nutzsignalen bzw. ein Signalausschnitt (ganzer oder ausgeschnittener Frequenzbereich) für die Extraktion von periodischen Störsignalen entnommen. Die zu wählende Größe richtet sich nach den jeweiligen Eigenschaften der zu extrahierenden Signalanteile.

**• Signal-Vorverarbeitung** und **Signal-Nachverarbeitung**

Diese Verarbeitungsschritte umfassen Standardverfahren zur Verbesserung der Signal-Stör-Verhältnisse und zur Erhöhung der Schätzgenauigkeiten für die Parameter der zu extrahierenden Signalanteile.

Zu solchen Standardverfahren der Signalverarbeitung gehören z.B. die Faltung oder die Multiplikation von Signalen im Zeit- und im Frequenzbereich. Ein Beispiel für transiente Signale ist ein Impulsfilter in Form einer Walsh-Funktion 1. Ordnung. Für periodische Signale ist z.B. das Hamming-Fenster eine übliche Methode zur Gewichtung des Signalabschnitts. Zu den Standardverfahren zählt auch das Auffüllen der Signalblöcke mit Nullen im Zeit- und/oder Frequenzbereich (Zero Padding). Der Einsatz dieser Verfahren bei der Vor- oder der NachVerarbeitung hängt von ihrer Wirkungsweise und dem Rechenaufwand ab.

**• Bereichs-Normalisierung**

Die Normalisierung erzeugt im Signalabschnitt aus dem farbigen Rauschprozess ein weißes Rauschen mit der konstanten Leistung unter der Erhaltung der lokalen Signal-Stör-Verhältnisse der Peaks zum Rauschhintergrund.

Das Ziel der Normalisierung ist die Schätzung des breiten Hintergrundes, wie er beim farbigen Rauschen vorliegt, wobei die Peaks nicht in diese Schätzung eingehen sollten. Die Detektionsschwelle für die Peaks ergibt sich dann aus dem (aufgrund der Falschalarmwahrscheinlichkeit gewählten) konstanten Verhältnis relativ zum Hintergrund. Das Patent **Verfahren und Vorrichtung zum Extrahieren von Zielsignalen** (DE 30 35 757 C2) enthält einen iterativen Algorithmus, der eine einfache Detektion von Peaks im breiten Rauschen erlaubt. Eine beispielhafte Anwendung für Signale mit periodischen Anteilen enthält das Patent **Verfahren zur Detektion und Ortung von Zielen** (EP 1 107 016 B1). Es existieren aber auch Verfahren, die auf Kosten der Schätzgenauigkeit und der Robustheit weniger aufwendig sind.

**• Peak-Detektion**

Bei der Überschreitung der Detektionsschwelle wird auf die Existenz eines oder mehrerer Peaks im Signalabschnitt entschieden. Werden

- Werden eine oder mehrere Peaks detektiert, so wird die **Iterative Extraktion der Peak-Signale** fortgesetzt.
- Werden keine Peaks detektiert, so ist die **Iterative Extraktion der Peak-Signale** beendet.

Der letzte Iterationsschritt ist erreicht, wenn alle Peaks erkannt sind und im Signalabschnitt eliminiert wurden. Die mögliche Anzahl der Schritte steigt mit sinkender Detektionsschwelle. Zur Begrenzung des Rechenaufwandes kann es zweckmäßig sein, die Anzahl der Iterationsschritte zu begrenzen. Sollen zum Beispiel im Zeitbereich nur die sehr starken Impulse erkannt werden, so reduziert sich die Anzahl auf einen Durchlauf.

**• Signalparameter-Schätzung**

Für alle im aktuellen Iterationsschritt detektierten Peaks werden die Signal-Parameter geschätzt, die zur Beschreibung des Signalverlaufs notwendig sind.

Für ein transientes Zeitsignal umfasst so ein Parametersatz z.B. Zeitpunkte und Amplituden für Minima, Maxima und Nulldurchgänge. Ein harmonisches Signal wird durch Amplitude, Schwingungsfrequenz und Anfangsphase beschrieben. Für solche Parameterschätzung existiert eine Reihe von Verfahren (z.B. von einfachen heuristischen Methoden bis zu aufwändigen statistischen Verfahren).

**• Signalparameter-Ablage**

Zusätzlich zu den vorher ermittelten Parametern wird der im aktuellen Iterationsschritt gewonnene Parametersatz für die nachfolgenden Iterationsschritte zwischengespeichert

Alle bis zum aktuellen Iterationsschritt ermittelten Parametersätze zusammen beschreiben die Signalverläufe für alle bisher erkannten Peaks. Grundsätzlich wäre es auch möglich, an dieser Stelle direkt die Signalverläufe zu aktualisieren und für die weitere Verwendung abzuspeichern.

• **Subtrahend-Generierung**

Aufgrund der bisher ermittelten Parametersätze wird das Summensignal der Signalverläufe für alle bisher erkannten Peaks generiert. Dieses Summensignal wird anschließend von dem ursprünglichen Signal subtrahiert.

Die besonderen Eigenschaften der **Iterativen Extraktion der Peak-Signale** sind:

1. Wenn die gesuchten Signalanteile auch tatsächlich die Form von konzentrierten Peaks und die anderen Signalanteile einen breiten Verlauf haben, wird das Signal-Stör-Verhältnis deutlich verbessert und die Schätzung der Signal-Parameter genauer als bei anderen allgemeinen Verfahren, die diese spezielle Eigenschaft nicht nutzen.

Für die Aufgabe der Extraktion von transienten Zeitsignalen gestört von quasiperiodischen Störprozessen und farbigen Rauschprozessen ist dies der Fall. Für das Beispiel der akustischen Aufklärung von Gehrschüssen von einer bewegten Plattform aus belegen dies die Größenangeben zu Beginn dieses Kapitels.

2. Durch die Iterationen werden nachträglich auch die Peaks erkannt, die vorher aufgrund von stärkeren Peaks verdeckt waren.

Im Zeit- und im Frequenzbereich überdecken häufig stärkere Peaks die schwächeren Peaks, die in unmittelbarer Nähe auftreten. Bei Knallen von Gewehrschüssen tritt dies z.B. infolge von Reflektionen und Mehrwegeausbreitung auf. Bei Fahrzeuggeräuschen bewirken z.B. die Antriebsaggregate, dass harmonischen Frequenzen der Spektrallinien direkt nebeneinander auftreten und dass diese Spektrallinien infolge von Frequenzschwankungen sich etwas verbreitern können.

3. Die Elimination von Peaks erfolgt durch die Subtraktion der geschätzten Peak-Folge vom ursprünglichen Signal ohne zusätzliche Filter.

Das gewünschte Signal bleibt so ungefiltert erhalten, so dass Verzerrungen durch Filter vermieden werden. Als additive Störung wirken sich nur die Peaks aus, die aufgrund der geringen Signalstärke und der Wahl der Detektionsschwelle nicht eliminiert werden.

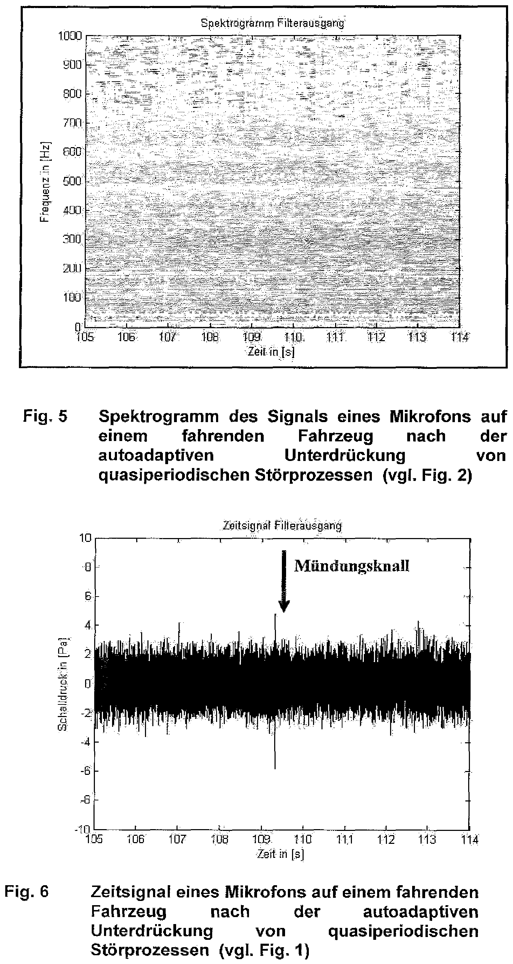

Die Wirkung der autoadaptiven Unterdrückung von quasiperiodischen Störprozessen demonstrieren die Diagramme in Figur 5 und Figur 6. Der Mündungsknall des Gewehres, der vorher von Fahrzeuggeräusch überdeckt war, kann nun detektiert werden.

## Vorteile der Erfindung

Die autoadaptive Unterdrückung von quasiperiodischen Störprozessen ist ein Verfahren, das

- für eine Folge von Impulsen im Zeitbereich, die durch quasiperiodische Störprozesse und breitbandige Rauschprozesse additiv gestört ist,
- durch eine zweistufiges Iterationsverfahren die quasiperiodische Störprozesse so eliminiert,
- dass auch vorher verdeckte Transiente detektierbar sind.

Die besonderen Vorteile dieser Erfindung im Vergleich zu bekannten Verfahren sind:

1. Autoadaptive Unterdrückung:
Die Notwendigkeit eines zusätzlichen Referenzsensors entfällt. Damit ist das Verfahren auch einsetzbar, wenn die Referenzmessung für die Störungen ohne Beeinflussung durch das Nutzsignal nicht zuverlässig möglich ist.

2. Zweistufiges Verfahren für Peaks im Zeitbereich und im Frequenzbereich:
Durch das zweistufige Verfahren wird erreicht, dass im ersten Schritt die Transienten im Zeitbereich die Extraktion der periodischen Anteile möglichst nicht beeinflussen und dass im zweiten Schritt die periodischen Störungen eliminiert werden.

3. Iterative Extraktion der Peaks im Zeitbereich und im Frequenzbereich:
Durch das iterative Vorgehen können auch schwache Peaks, die vorher neben starken Peaks nicht detektierbar waren, nachträglich erkannt und eliminiert werden.

4. Subtraktionsverfahren zur Elimination unerwünschter Signalanteile:
Durch den Verzicht auf (adaptive oder nichtadaptive) Filter bleiben die zu detektierenden Impulse ungefiltert erhalten, so dass Verzerrungen vermieden werden. Als additive Störung wirken sich nur die Peaks aus, die aufgrund der geringen Signalstärke und der Wahl der Detektionsschwelle nicht eliminiert werden.

Das Verfahren der autoadaptiven Unterdrückung von quasiperiodischen Störprozessen kann in allen Produkten zur akustischen Aufklärung in einer gestörten Umgebung verwendet werden. Bevorzugtes Anwendungsgebiet ist die Aufklärung von Gewehrschützen. Die folgende Aufstellung enthält weitere Verwendungsmöglichkeiten:

- Bei einer Mikrofonantenne auf Bodenfahrzeugen mit Richtungsbildung zur akustischen Aufklärung von Gewehrschützen,
- bei einer von Personen an der Bekleidung tragbaren sehr kleinen Mikrofonantenne mit Richtungsbildung zur akustischen Aufklärung von Gewehrschützen in urbaner Umgebung,
- bei einer stationären Mikrofonantenne auf Stativ oder beliebig befestigt an existierenden Einrichtungen mit Richtungsbildung zur akustischen Aufklärung von Gewehrschützen in urbaner Umgebung,
- bei einer Mikrofonantenne an Hubschraubern mit Richtungsbildung zur akustischen Aufklärung von Gewehrschützen,
- bei Mikrofonantennen auf Wasserfahrzeugen mit Richtungsbildung zur akustischen Aufklärung von Gewehrschützen,
- bei einzelnen Mikrofonen und Beschleunigungssensoren zur frühzeitigen Detektion von Klopfgeräuschen bei Verbrennungsmotoren,
- bei der Wahrnehmung von Außengeräuschen in einem Fahrzeug durch außen am Fahrzeug angebrachte Einzelmikrofone oder Mikrofonantennen zur Unterdrückung der Eigengeräusche des Fahrzeugs.

**Abkürzungsverzeichnis:**

| Abkürzung | Bedeutung |
| --- | --- |
| AAPNC | Auto-Adaptive Periodic Noise Cancelling |
| ANC | Adaptive Noise Cancelling |
| kA | keine Angabe |
| LMS | Least Mean Square |
| RLS | Recursive Least Square |
| z.B. | zum Beispiel |

**Symbolverzeichnis:**

| Symbol | Einheit | Bedeutung |
| --- | --- | --- |
| $\tau$ | s | Zeitverzögerung |
| ^ | - | Schätzung |
| ASD(f) | $Pa^2s/Hz$ | Energy Spektral Density |
| e(t) | Pa | Fehlersignal (Error Signal) |
| f | Hz | Frequenz |
| n(t) | Pa | breitbandiger Zufallsprozess (Noise) |
| p(t) | Pa | Luftschall-Druck allgemein |
| p(t) | Pa | quasiperiodischer Zufallsprozess |
| PSD(f) | $Pa^2/Hz$ | Power Spectral Density Leistungsdichtespektrum Luftschall-Druck |
| r(t) | Pa | Empfangssignal (Received Signal) |
| s(t) | Pa | Nutzsignal (Signal) am Empfänger |
| $s_{MB}(t)$ | Pa | Mündungsknall (Muzzle Blast) |
| $s_{SW}(t)$ | Pa | Schockwelle bzw. Geschossknall (Shock Wave) |

**EP 2 901 171 B1**

(fortgesetzt)

| Symbol | Einheit | Bedeutung |
|---|---|---|
| t | s | Zeit |
| u(x) | Pa | Ursprungssignal im Zeitbereich bzw. Ursprungssignal im Frequenzbereich |
| $v(x_A)$ | Pa | Signalausschnitt Ursprungssignal im Zeitbereich bzw. Signalausschnitt Ursprungssignal im Frequenzbereich |
| $w(x_A)$ | Pa | Folge von Peaks im Zeitbereich bzw. Folge von Peaks im Frequenzbereich |
| x | s bzw. Hz | Zeit t für Signal im Zeitbereich bzw. Frequenz f für Signal im Frequenzbereich |
| $x_A$ | s bzw. Hz | Zeitausschnitt für Signal im Zeitbereich bzw. Frequenzausschnitt f für Signal im Frequenzbereich |

**Patentansprüche**

1. Verfahren zur Unterdrückung von periodischen Anteilen in Empfangssignalen, die transiente Nutzsignale enthalten können, insbesondere zur Ortung von Geschoss- und Mündungsknallen, wobei durch ein zweistufiges Iterationsverfahren quasiperiodische Störanteile im Empfangssignal ermittelt und anschließend eliminiert werden, **dadurch gekennzeichnet, dass**

   - in einer ersten Stufe in einem Zeitbereich die Transienten iterativ detektiert werden, deren Signalparameter geschätzt werden und daraus deren geschätzter
   Zeitverlauf bestimmt wird, um durch Differenzbildung zwischen dem Empfangssignal und den extrahierten Transienten das von diesen Transienten befreite Signal zu gewinnen und daraus
   - in einer zweiten Stufe die harmonischen Anteile periodischer Prozesse im Frequenzbereich iterativ detektiert werden, deren Signalparameter geschätzt werden und daraus deren geschätzter Zeitverlauf bestimmt wird, um durch Differenzbildung zwischen dem Empfangssignal und den extrahierten harmonischen Anteilen der periodischen Prozesse das allein von diesen Anteilen befreite Signal zu gewinnen.

**Claims**

1. Method for the suppression of periodic components in received signals that can contain transient useful signals, particularly for the location of shot and muzzle blasts, wherein quasiperiodic noise components in the received signal are determined and then eliminated by means of a two-stage iteration method, **characterized in that**

   - in a first stage in a time domain the transients are iteratively detected, their signal parameters are estimated and their estimated time profile is determined therefrom in order to obtain a signal free of transients by forming the difference between the received signal and said extracted transients and therefrom
   - in a second stage the harmonic components of periodic processes in the frequency domain are iteratively detected, their signal parameters are estimated and their estimated time profile is determined therefrom in order to obtain the signal freed only of the harmonic components by forming the difference between the received signal and said extracted harmonic components of the periodic processes.

**Revendications**

1. Procédé de suppression de composantes périodiques de signaux de réception susceptibles de contenir des signaux utiles transitoires, en particulier pour localiser des détonations de tirs et de projectiles, dans lequel un procédé d'itération en deux étapes permet de déterminer des composantes de brouillage quasi-périodiques du signal reçu puis de les éliminer, **caractérisé en ce que**

   - dans une première étape, les transitoires sont détectés de manière itérative dans un domaine temporel, leurs paramètres de signaux sont estimés et leur l'évolution temporelle estimée est déterminée à partir de ceux-ci afin d'obtenir le signal débarrassé desdits transitoires par calcul d'une différence entre le signal de réception et les transitoires ayant été extraits et, à partir de celui-ci,

- dans une deuxième étape, les composantes harmoniques de processus périodiques sont détectées de manière itérative dans le domaine fréquentiel, leurs paramètres de signaux sont estimés et leur évolution temporelle estimée est déterminée à partir de ceux-ci afin d'obtenir le signal seul débarrassé desdites composantes par calcul d'une différence entre le signal reçu et les composantes harmoniques des processus périodiques ayant été extraites.

**Fig. 1** Zeitsignals eines Mikrofons auf einem fahrenden Fahrzeug

**Fig. 2** Spektrogramm des Signals eines Mikrofons auf einem fahrenden Fahrzeug

EP 2 901 171 B1

**Fig. 3**            **Blockschaltbild**

**Fig. 4**            **Iterative Extraktion von Peaks**

Fig. 5     Spektrogramm des Signals eines Mikrofons auf einem fahrenden Fahrzeug nach der autoadaptiven Unterdrückung von quasiperiodischen Störprozessen (vgl. Fig. 2)

Fig. 6     Zeitsignal eines Mikrofons auf einem fahrenden Fahrzeug nach der autoadaptiven Unterdrückung von quasiperiodischen Störprozessen (vgl. Fig. 1)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3035757 C2

- EP 1107016 B1

**In der Beschreibung aufgeführte Nicht-Patentliteratur**

- **DELPHINE FEUERSTEIN et al.** Practical Methods for Noise Removal: Applications to Spikes, Nonstationary Quasi-Periodic Noise, and Baseline Drift. *ANALYTICAL CHEMISTRY,* 15. Juni 2009, vol. 81 (12), 4987-4994